# EUROPEAN PATENT SPECIFICATION

(11) **EP 2 112 828 B1**
(45) Date of publication and mention of the grant of the patent: **04.01.2012**
(21) Application number: 08155213.5
(22) Date of filing: 25.04.2008
(51) Int. Cl.: H04N 7/16

(54) **Method and system for activating a decoder device**
System und Verfahren zum Aktivieren einer Decodervorrichtung
Procédé et système pour activer un dispositif décodeur

(43) Date of publication of application: 28.10.2009
(73) Proprietor: Irdeto B.V., 2132 HD Hoofddorp (NL)
(72) Inventor: Bosscha, Albert-Jan, 2134 VC Hoofddorp (NL)
(74) Representative: Tucker, Nigel P.

(56) References cited:
- EP-A- 1 626 579
- WO-A-97/35430
- FR-A- 2 779 599
- US-A- 5 748 732
- US-A1- 2006 101 526

## Description

### FIELD OF THE INVENTION

The present invention relates to a method for activating one or more secondary decoder devices, a head-end system for activating one or more secondary decoder devices, a secondary smartcard and a decoder device.

### BACKGROUND

Conditional access systems are generally used to provide conditional access to services like pay TV. In a conditional access system, scrambled TV signals are transmitted from a head-end system to a decoder device. An end-user of the pay TV service inserts a smartcard in the decoder device to conditionally enable descrambling of the scrambled TV signal. The smartcard receives entitlement management messages (EMM) from the head-end system with authorization information. If the end-user is authorised, e.g. because he has a valid subscription, encrypted entitlement control messages (ECM) sent from the head-end system to the smartcard are decrypted in the smartcard. Hereby control words (CW) are retrieved from the ECMs. The CWs are transmitted to the decoder device, where the CWs are used to descramble the scrambled TV signals. The descrambled TV signals are viewable on a terminal like a television, a PC or a mobile phone, or can be recorded on a video recorder.

A decoder device with inserted smartcard typically allows only one terminal to be connected. Consequently each terminal requires a dedicated decoder device and smartcard to enable descrambling of the scrambled TV signal. For each smartcard an authorisation is required to enable decrypting of ECMs in the smartcard. This means that an end-user having e.g. two televisions requires two subscriptions, one for each smartcard.

Each smartcard operates as a stand alone smartcard. With a change in the authorisation of an end-user, each smartcard receives an EMM to update the authorization of the smartcard. E.g. when an end-user with multiple decoder devices subscribes to a pay TV service, each smartcard intended for use in the decoder devices receives an EMM to enable decrypting ECMs to thereby effectively activate descrambling the TV signals in the decoder device.

### SUMMARY OF THE INVENTION

It is an object of the invention to provide an improved method and system for activating one or more secondary decoder devices.

According to an aspect of the invention a method is provided for activating one ore more secondary decoder devices, as defined in claim 1.

Thus the method of the invention advantageously enables the head-end system to control which decoder devices may be used to descramble e.g. a scrambled TV signal by activating a primary decoder device and initializing one or more secondary decoder devices, which primary decoder device controls the activation of the secondary decoder devices. The primary decoder device and secondary decoder devices are typically located at the premises of an end-user and are typically used to descramble a pay TV signal for viewing and/or recording on terminals connected to the decoder devices. Advantageously an end-user can use secondary decoder devices without requiring stand alone subscriptions for each secondary decoder device. Instead a subscription can be linked to the primary decoder device, while for the secondary decoder devices the subscriptions are offered at e.g. a reduced rate.

The invention advantageously enables activation of the primary decoder device and initialization and activation of the second decoder device by using smartcards. When using smartcards, the subscriptions are typically linked to the smartcards. Typically the primary smartcard and secondary smartcard are physically identical. A smartcard becomes a primary smartcard by receiving the activation message from the head-end system. A smartcard becomes a secondary smartcard by receiving the activation message from the primary decoder device.

The embodiments of claims 2 and 7 advantageously enable the second activation data, which is used to activate the secondary decoder device, to be placed on the secondary smartcard by inserting the secondary smartcard in the primary decoder device.

The embodiment 3 and 8 advantageously enable the second activation data, which is used to activate the secondary decoder device, to be placed on the secondary smartcard by inserting the secondary smartcard in the secondary decoder device.

The embodiment of claim 4 advantageously enables the secondary decoder device to be deactivated and reactivated under control of the head-end system.

According to an aspect of the invention a head-end system is provided for activating one or more secondary decoder devices, as defined in claim 5.

Thus the invention advantageously enables the head-end system to control which decoder devices may be used to descramble e.g. a scrambled TV signal by activating a primary decoder device and initializing one or more secondary decoder devices. The primary decoder device and secondary decoder devices are typically located at the premises of an end-user and are typically used to descramble a pay TV signal for viewing and/or recording on terminals connected to the decoder devices. Advantageously an end-user can use secondary decoder devices without requiring stand alone subscriptions for each secondary smart card. Instead a subscription can be linked to the primary smartcard, while for the secondary smart cards the subscriptions are offered at e.g. a reduced rate.

The invention advantageously enables the head-end system to control the secondary decoder device for deactivation of the secondary decoder device and the primary decoder device for reactivation of the secondary decoder device.

According to an aspect of the invention a secondary smartcard is provided for use in a system comprising a head-end system, a primary decoder device and one or more secondary decoder devices, as defined in claim 6.

Thus the secondary smartcard of the invention advantageously enables initialization of the secondary decoder device under control of the head-end system and activation of the secondary decoder device under control of the primary decoder device.

US 5 748 732 A (LE BERRE JACQUES [FR] ET AL) 5 May 1998 (1998-05-05) discloses a pay TV method and device which comprise master and slave decoders. It is an object to render the use of a slave decoder difficult if it is not used in the proximity of a master decoder. Hereto messages supplied by a management device can only be exploited by the master decoder. Slave entitlements are never transmitted directly from the management device to the slave decoder and smart card assembly and the address and data of authentication correspond to the master decoder.

### BRIEF DESCRIPTION OF THE DRAWINGS

Aspects of the invention will be explained in greater detail by reference to exemplary embodiments shown in the drawings, in which:
Fig.1 shows a head-end system in a conditional access system of an exemplary embodiment of the invention;
Fig.2a shows the steps of a method of an exemplary embodiment of the invention;
Fig.2b shows the steps of a method of an exemplary embodiment of the invention;
Fig.3a shows a secondary smartcard in a conditional access system of an exemplary embodiment of the invention;
Fig.3b shows a secondary smartcard in a conditional access system of an exemplary embodiment of the invention;
Fig.4 shows the steps of a method of an exemplary embodiment of the invention;
Fig.5 shows the steps of a method of an exemplary embodiment of the invention; and
Fig.6 shows the steps of a method of an exemplary embodiment of the invention.

### DETAILED DESCRIPTION

An end-user typically owns multiple terminals for viewing or recording TV signals, A first television and a video recorder are e.g. located in the living room, while a second television is located in a bedroom. To be able to watch and record scrambled pay-TV signals, decoder devices such as e.g. set-top boxes are connected to each television and video recorder. The set-top box connected to the first television operates as the primary decoder device. The set-top box connected to the video recorder and the set-top box connected to the second television operate as secondary decoder devices. It is possible to have any one of the set-top boxes operate as the primary decoder device, as long as there is only one primary set-top box defined in a group of decoder devices of the end-user. In the following examples the group of decoder devices is also called a home network.

The primary set-top box is activated by a head-end system of a service provider, while the secondary set-top boxes are initialized by the head-end system. After initialization, the secondary set-top boxes are activated by the primary set-top box. The set-top boxes are initialized and activated via the intermediary of smartcards, as will be described. Activation messages and initialization messages send from the head-end system are typically transmitted in entitlement management messages (EMMs).

When a primary or secondary set-top box is activated, it is ready to descramble scrambled TV signals. When activated, entitlement control messages (ECMs) received with the scrambled TV signals are decrypted by a smartcard, and control words obtained from the ECMs are passed from the smartcard to the descrambler of the set-top box. This enables the descrambler to descramble the scrambled TV signals. When a secondary set-top box is initialized, it is ready to receive activation data from the primary set-top box via the intermediary of a secondary smartcard. Without initialization, the secondary set-top box discards activation data received from the primary set-top box. Alternatively it is the secondary smartcard that discards the activation data, resulting in the secondary set-top box not being activated.

For each set-top box the end-user receives a smartcard, which is to be inserted into the set-top box to allow operation of the set-top box. The smartcard used in the primary decoder device becomes a primary smartcard upon receiving an activation message from the head-end system. Smartcards used in secondary decoder devices become secondary smartcards upon receiving an initiation message from the head-end system and/or receiving activation data from the primary decoder device.

Alternatively the smartcards are embed in the set-top boxes, e.g. as surface mounted devices (SMD).

The end-user pays a subscription fee for each smartcard to enable ECM processing by the smartcard. Smartcards sold to end-users are administered in a smartcard management module of the head-end system. The smartcard management module stores smartcard serial numbers and associates primary smartcards with secondary smartcards. To the primary smartcard a full subscription fee applies, while to the secondary smartcards a reduction in the subscription fee is applied.

To define the smartcards as primary or secondary, the end-user contacts the service provider. The end-user provides the smartcard serial numbers of each smartcard in the home network and indicates which smartcard is going to be used as the primary smartcard. The serial number of a smartcard can e.g. be printed on the smartcard, provided in a letter or presented to the end-user via the television when the smartcard is inserted into a set-top box. The smartcard management module records which smartcard is to operate as the primary smartcard and associates the serial numbers of the secondary smartcards with the primary smartcard. Alternatively the service provider predefines which smartcard is going to operate as primary smartcard and provides the end-user with the serial number of the predefined primary smartcard and serial numbers of the predefined secondary smartcards.

Initially, when the end-users buys the smartcards, the primary smartcard and secondary smartcards can be operationally identical, meaning that it is not yet defined which of the smartcards operates as primary smartcard or as secondary smartcard. Depending on how the smartcard is administered in the smartcard management module, the smartcard can become a primary smartcard when activated by the head-end system or a secondary smartcard when initialized by the head end-system and/or activated by the primary decoder device.

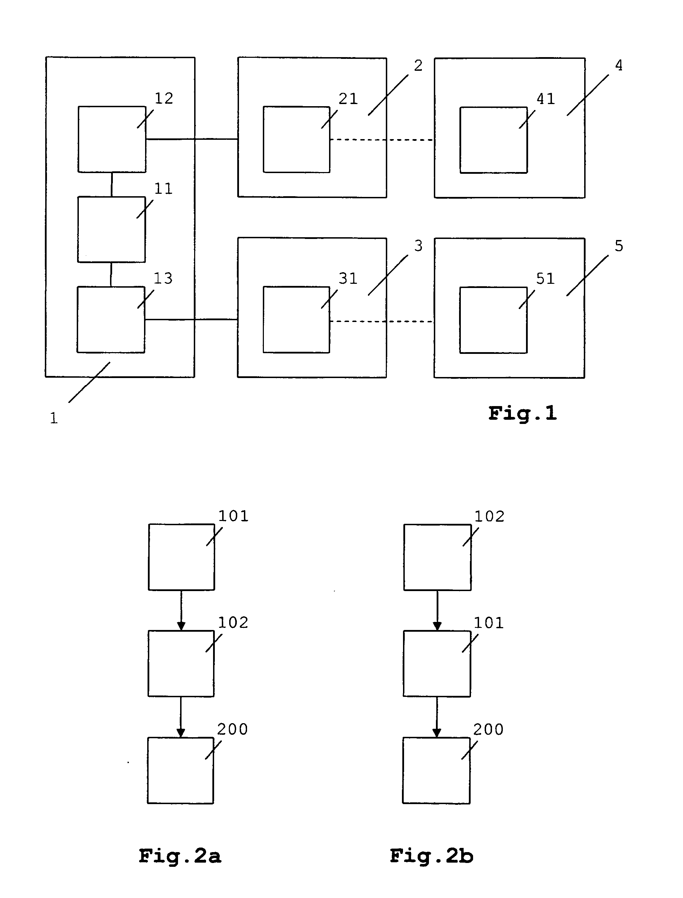

Fig.1 shows head-end system 1 as part of a conditional access system of an exemplary embodiment of the invention. Head-end system 1 comprises the smartcard management module 11, an activation module 12 and an initialization module 13.

The smartcard management module 11 is used for storing the serial numbers of smartcards and for associating primary smartcards with secondary smartcards. A primary smartcard can e.g. be associated with a secondary smartcard by storing the corresponding serial numbers in a database and indicating in the database which serial number belongs to the smartcard operating as primary smartcard.

Head-end system 1 is communicatively linked to primary set-top box 2 and secondary set-top box 3. The link between head-end system 1 and set-top boxes 2 and 3 can comprise various intermediary links, such as wireless trajectories and/or wired trajectories between the head-end system and the home of the end-user, as well as wireless trajectories and/or wired trajectories within the home network. It is possible that the head-end system 1 is communicatively linked to the secondary set-top box 3 via the intermediary of the primary set-top box 2.

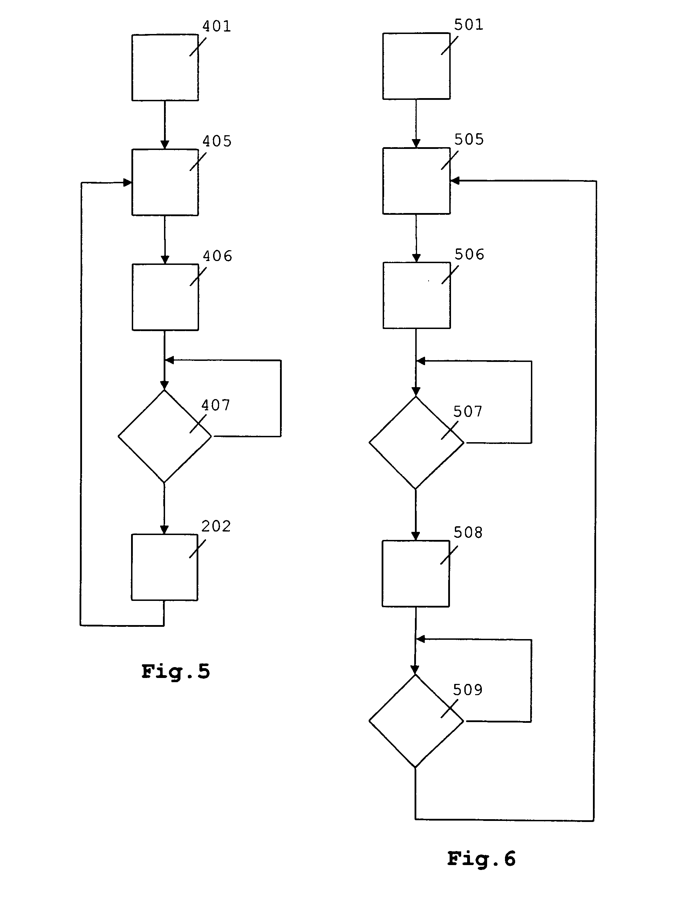

Primary smartcard 4 is used together with primary set-top box 2. Secondary smartcard 5 is used together with secondary set-top box 3. The smartcards 4 and 5 are e.g. credit-card sized smartcards, which are to be inserted in the set-top boxes for operation. The dashed line between set-top box and smartcard indicates that the smartcard is insertable in and removable from the set-top box. The primary set-top box 2 communicates with the primary smartcard 4 through primary interface 21. The secondary set-top box 3 communicated with the secondary smartcard 5 through secondary interface 31. Optionally the primary smartcard comprises a first timer 41 and the secondary smartcard 5 comprises a second timer 51. The function of the timers will be described in detail with Fig.5 and Fig.6.

The activation message in the form of an EMM message is transmitted from the activation module 12 to the primary smartcard 4 via the intermediary of primary set-top box 2 and primary interface 21. Using the activation message, the primary smartcard 4 creates first activation data and provides the activation data to the primary set-top box via the intermediary of the primary interface 21. With the first activation data the primary set-top box 2 is activated and ready to descramble scrambled TV signals. The activation message comprises the serial numbers of secondary smartcards in the home network. These serial numbers will be used to identify the secondary smartcards to be activated.

The initialization message in the form of an EMM message is transmitted from the initialization module 13 to the secondary smartcard 5 via the intermediary of secondary set-top box 3 and secondary interface 31. The secondary smartcard 5 creates initialization data and provides the initialization data to the secondary set-top box via the intermediary of the secondary interface 31. With the initialization data the secondary set-top box 3 is initialized and waiting to be activated. The initialization message comprises the serial number of the primary smartcard. This serial number will be used to identify the primary smartcard and accept activation data from the primary smartcard.

Fig.2a shows the steps of activating one or more secondary set-top boxes 3 of an exemplary embodiment of the invention. In step 101 the head-end system 1 activates the primary set-top box 2. In step 102 the head-end system 1 initializes the secondary set-top box 3. The primary set-top box 2 activates the secondary set-top box 3 in step 200.

The order of activating 101 the primary set-top box 2 and initializing 102 the secondary set-top box 3 can alternatively be altered. This is illustrated in Fig.2b.

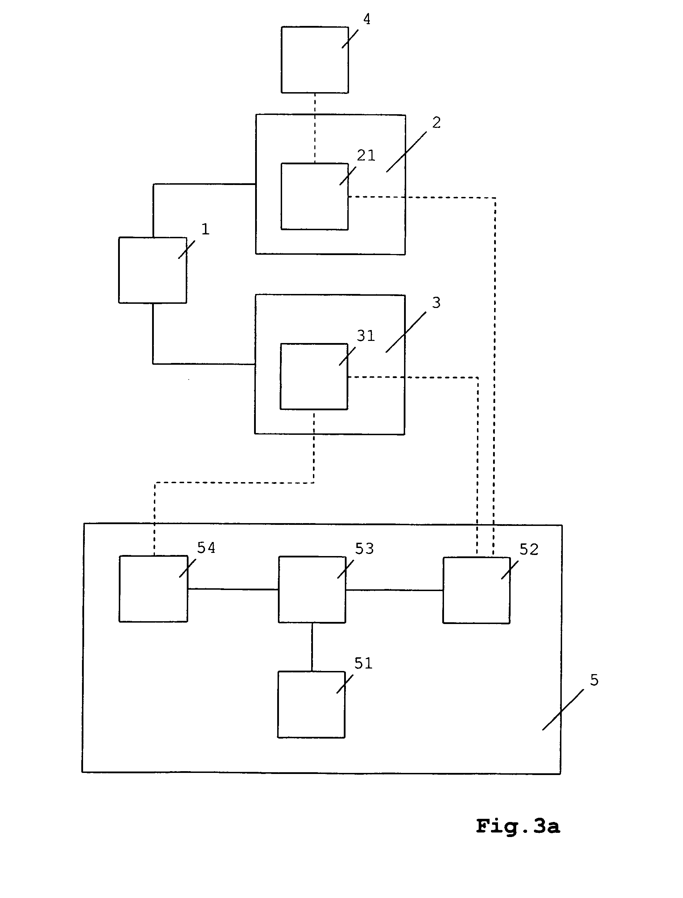

Fig.3a shows a secondary smartcard 5 in a conditional access system of an exemplary embodiment of the invention. The dashed lines indicate non-permanent connections, i.e. the smartcards are insertable in and removable from the set-top boxes. In Fig.3a the primary smartcard 4 is inserted in primary set-top box 2. Secondary smartcard 5 is insertable in both primary set-top box 2 and secondary set-top box 3.

In addition to Fig.1, Fig.3a shows in more detail the elements within the secondary smartcard 5 used for initialization and activation of the secondary set-top box 3. A processor 53 is connected to a receiver 52 and a transmitter 54. The processor is also connected to timer 51. The function of the timer 51 will be described in detail with Fig.5 and Fig.6.

To enable the secondary smartcard 5 to receive the initialization message from the head-end system 1, the secondary smartcard 5 is inserted into secondary set-top box 3. The initialization message is received in receiver 52 via the intermediary of the secondary interface 31. The processor 53 creates initialization data using the initialization message and via transmitter 54 the initialization data is provided to the secondary set-top box 3 via the intermediary of the secondary interface 31.

To activate the secondary set-top box 3, the secondary smartcard 5 is removed from the secondary set-top box 3 and inserted into the primary set-top box 2. The primary smartcard 2 may have to be temporary removed from the primary set-top box 2 to enable this. Second activation data generated by the primary smartcard 2 is stored in the primary set-top box 2 prior to removing the primary smartcard 4 from the primary set-top box 2. When the secondary smartcard 5 is inserted into primary set-top box 2, the serial number of the secondary smartcard 5 is compared with the serial numbers received from the head-end system 1. If the serial number matches, then the secondary smartcard 5 is allowed to be activated by the primary set-top box 2. If furthermore the secondary smartcard 5 is initialized, the secondary smartcard 5 obtains the second activation data from the primary set-top box via the intermediary of the primary interface 21.

Next, the secondary smartcard 5 is removed from the primary set-top box 2 and inserted into the secondary set-top box 5. The primary smartcard 4 is inserted into the primary set-top box 2. The secondary smartcard 5 provides the second activation data to the secondary set-top box 3 through transmitter 54 and secondary interface 31. With the second activation data the secondary set-top box 3 is activated and ready to descramble scrambled TV signals.

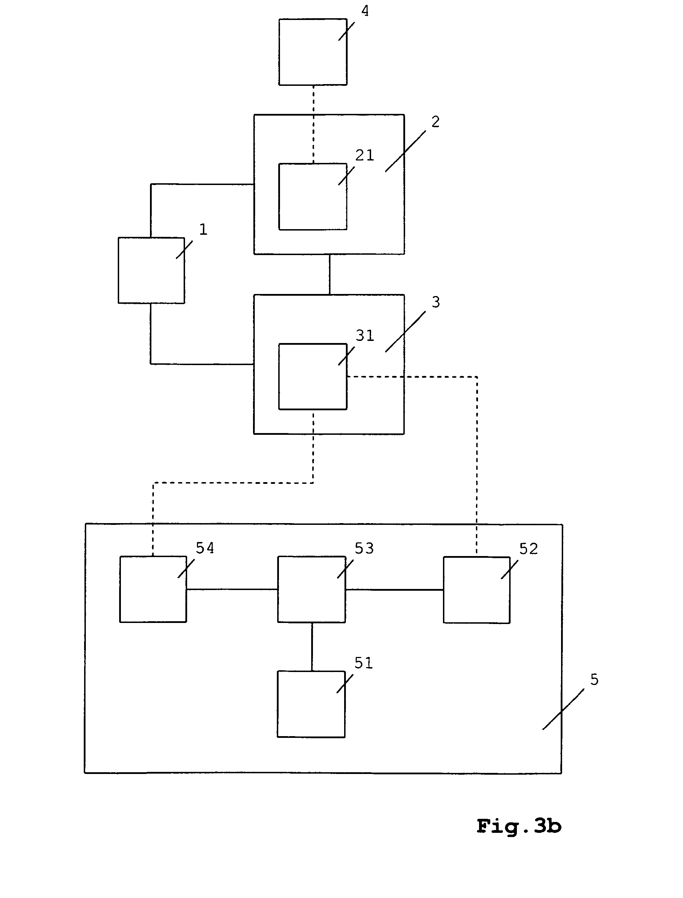

In Fig.3b the secondary smartcard 5 is inserted into the secondary set-top box 3. Primary set-top box 2 and secondary set-top box 3 are communicatively linked. In this exemplary embodiment the secondary smartcard 5 can remain inserted into the secondary set-top box 3. The second activation data is provided from the primary set-top box 2 to the secondary smartcard 5 via the communication link between primary and secondary set-top box and the secondary interface 31.

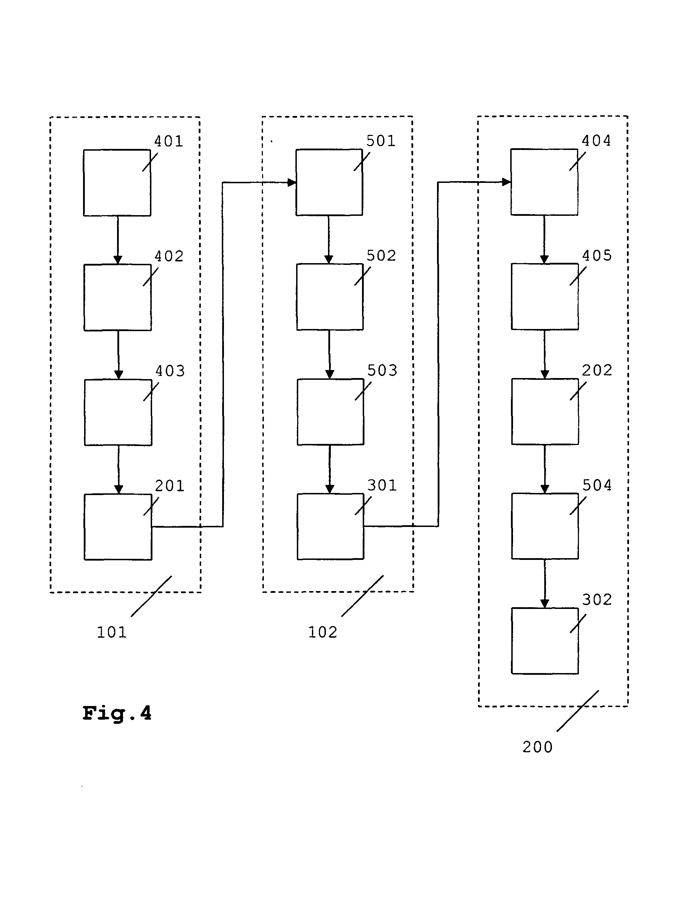

Fig.4 shows the steps of activating one or more secondary set-top boxes 3 of an exemplary embodiment of the invention. The steps in block 101 are related to the activation of the primary set-top box 2. The steps in block 102 are related to the initialization of the secondary set-top box 3. The steps in block 200 are related to the activation of the secondary set-top box 3.

In step 401 the activation message is received from the head-end system 1 in the primary smartcard 4. In step 402 the primary smartcard 4 creates first activation data using the activation message. In step 403 the first activation data is provided to the primary set-top box 2 via the primary interface 21. In step 201 the primary set-top box 2 is activated using the first activation data.

In step 501 the initialization message is received from the head-end system 1 in the secondary smartcard 5. In step 502 the secondary smartcard 5 creates initialization data using the initialization message. In step 503 the initialization data is provided to the secondary set-top box 3 via the secondary interface 31. In step 301 the secondary set-top box 3 is initialized using the initialization data.

In step 404 the primary smartcard 4 creates second activation data. In step 405 the second activation data is provided to the primary set-top box 2 via the first interface 21. In step 202 the second activation data is provided to the secondary smartcard 5. In step 504 the second activation data is provided from the secondary smartcard 5 to the secondary set-top box 3 via the secondary interface 31. In step 302 the secondary set-top box 3 is activated using the second activation data.

Fig.5 describes the function of optional first timer 41 within primary smartcard 4. First timer 41 is activated by the activation message received from the head-end system 1. After an amount of time - which is either provided in the activation message or predefined in the first timer 41 - has lapsed, renewed second activation data is generated to be provided to the secondary smartcard 5 as described for Fig.3a or Fig.3b.

In step 401 the activation message is received from the head-end system 1 in the primary smartcard 4. From the activation message a first timer value is obtained, which is used to set the first timer 41 in step 405. The first timer value is e.g. the value 600, which is used to set first timer 41 to 600 seconds. In step 406 the first timer 41 is activated. In step 407 the first timer checks the status of the first timer 41. If 600 seconds have lapsed, renewed second activation data is provided to the secondary smartcard 5 and the first timer 41 is set to 600 seconds again.

Fig.6 describes the function of optional second timer 51 within secondary smartcard 5. Second timer 51 is activated by the initialization message received from the head-end system 1. After an amount of time - which is either provided in the initialization message or predefined in the second timer 51 - has lapsed, the secondary set-top box 3 is deactivated by the secondary smartcard 5. The secondary set-top box can be reactivated with renewed second activation data similar to the activation using second activation data as described for activation data in Fig.3a or Fig.3b.

In step 501 the initialization message is received from the head-end system 1 in the secondary smart 5. From the initialization message a second timer value is obtained, which is used to set the second timer 51 in step 505. The second timer value is e.g. the value 900, which is used to set second timer 51 to 900 seconds. In step 506 the second timer 51 is activated. In step 507 the second timer checks the status of the second timer 51. If 900 seconds have lapsed, the secondary decoder device 3 is deactivated until renewed second activation data is received. The renewed second activation data is e.g. received upon expiration of the first timer value in the first timer 41, as described for Fig.5. In step 509 the secondary smartcard 5 checks whether or not the second activation data is received. Upon receipt of the second activation data, the secondary set-top box 3 is activated and the second timer 51 is set to 900 seconds again.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from appropriate consideration of the drawings, the disclosure, and the appended claims.

## Claims

1. A method for activating one or more secondary decoder devices in a system comprising a head-end system, a primary decoder device and the one or more secondary decoder devices, the head-end system being communicatively connected to the primary decoder device and to the one or more secondary decoder devices, the method comprising the steps of:
the head-end system activating (101) the primary decoder device;
the head-end system initializing (102) the secondary decoder device; and
the primary decoder device activating (200) the initialized secondary decoder device,
wherein the primary decoder device comprises a primary interface configured for communication with a primary smartcard and the secondary decoder device comprises a secondary interface configured for communication with a secondary smartcard, the method further comprising the steps of:
receiving (401) in the primary smartcard an activation message from the head-end system, creating (402) in the primary smartcard first activation data using the activation message, providing (403) the first activation data via the primary interface to the primary decoder device, and activating (201) the primary decoder device using the first activation data;
receiving (501) in the secondary smartcard an initialization message from the head-end system, creating (502) in the secondary smartcard initialization data using the initialization message, providing (503) the initialization data via the secondary interface to the secondary decoder device, and initializing (301) the secondary decoder device using the initialization data;
creating (404) in the primary smartcard second activation data and providing (405) the second activation data via the first interface to the primary decoder device;
providing (202) the second activation data from the primary decoder device to the secondary smartcard; and
providing (504) the second activation data from the secondary smartcard via the secondary interface to the secondary decoder device, and activating (302) the secondary decoder device using the second activation data,
and wherein the primary smartcard comprises a first timer, and wherein the method further comprises the steps of setting (405) the first timer using a first timer value comprised in the activation message, activating (406) the first timer, and upon expiration of the first timer value providing (202) renewed second activation data from the primary decoder device to the secondary smartcard.

2. The method according to claim 1, wherein the primary interface is further configured for communication with the secondary smartcard, and wherein providing (202) the second activation data from the primary decoder device to the secondary smartcard through the primary interface.

3. The method according to claim 1, wherein the primary decoder device is communicatively connected to the secondary decoder device, and providing (202) the second activation data from the primary decoder device to the secondary smartcard through a communication link between the primary decoder device and the secondary decoder device.

4. The method according to any one of the claims 1-3, wherein the secondary smartcard comprises a second timer, and wherein the method further comprises the steps of setting (505) the second timer using a second timer value comprised in the initialization message, activating (506) the second timer, and upon expiration of the second timer value deactivating (508) the secondary decoder device until the renewed second activation data is received in the secondary smartcard.

5. A head-end system (1) for activating one or more secondary decoder devices (3) in a system comprising the head-end system (1), a primary decoder device (2) comprising a primary interface (21) configured for communication with a primary smartcard (4), and the one or more secondary decoder devices (3) comprising a secondary interface (31) configured for communication with one or more secondary smartcards (5), the head-end system (1) being communicatively connected to the primary decoder device (2) and to the one or more secondary decoder devices (3), the head-end system (1) comprising:
a smartcard management module (11) configured for associating the one or more secondary smartcards (5) with the primary smartcard (4);
an activation module (12) configured for activating the primary decoder device (2) by providing an activation message to the primary smartcard (4); and
an initialization module (13) configured for initializing the secondary decoder device (3) by providing an initialization message to the secondary smartcard (5),
wherein the activation message comprises a first timer value for setting a first timer (41) in the primary smartcard (2), and wherein the initialization message comprises a second timer value for setting a second timer (51) in the secondary smartcard (5).

6. A secondary smartcard (5) for use in a system comprising a head-end system (1), a primary decoder device (2) comprising a primary interface (21) configured for communication with a primary smartcard (4), and one or more secondary decoder devices (3), the secondary decoder device (3) comprising a secondary interface (31) configured for communication with the secondary smartcard (5), the secondary smartcard (5) comprising:
a receiver (52) configured for receiving an initialization message from the head-end system (1), the receiver (52) further configured for receiving activation data from the primary smartcard (4) via the intermediary of the primary decoder device (2);
a processor (53) configured for creating initialization data using the initialization message;
a transmitter (54) configured for providing the initialization data via the secondary interface (31) to the secondary decoder device (3) for initializing the secondary decoder device (3), the transmitter (54) further configured for providing the activation data via the secondary interface (31) to the secondary decoder device (3) for activating the secondary decoder device (3),
further comprising a timer (51), and wherein the processor (53) is further configured for setting the timer (51) using a timer value comprised in the initialization message and for activating the timer (51), and wherein the secondary smartcard (5) is configured for deactivating the secondary decoder device (3) upon expiration of the second timer value until a renewed second activation data is received from the primary smartcard (4).

7. The secondary smartcard (5) according to claim 6, wherein the receiver (52) is configured for receiving the activation data from the primary smartcard (4) via the intermediary of the primary decoder device (2) through the primary interface (21).

8. The secondary smartcard (5) according to claim 6, wherein the receiver (52) is configured for receiving the activation data from the primary smartcard (4) via the intermediary of the primary decoder device (2) through a communication link between the primary decoder device (2) and the secondary decoder device (3) and the secondary interface (31).

## Patentansprüche

1. Verfahren zum Aktivieren einer oder mehrerer sekundärer Decodervorrichtungen in einem System, umfassend ein Head-End-System, eine primäre Decodervorrichtung und die eine oder die mehreren sekundären Decodervorrichtungen, wobei das Head-End-System mit der primären Decodervorrichtung und der einen oder den mehreren sekundären Decodervorrichtungen in Kommunikationsverbindung steht, wobei das Verfahren die Schritte umfasst, dass:
das Head-End-System die primäre Decodervorrichtung aktiviert (101);
das Head-End-System die sekundäre Decodervorrichtung initialisiert (102); und
die primäre Decodervorrichtung die initialisierte sekundäre Decodervorrichtung aktiviert (200),
wobei die primäre Decodervorrichtung eine primäre Schnittstelle umfasst, welche für eine Kommunikation mit einer primären Smartcard eingerichtet ist, und die sekundäre Decodervorrichtung eine sekundäre Schnittstelle umfasst, welche für eine Kommunikation mit einer sekundären Smartcard eingerichtet ist, wobei das Verfahren ferner die Schritte umfasst:
Empfangen (401) in der primären Smartcard einer Aktivierungsmitteilung von dem Head-End-System, Erzeugen (402) in der primären Smartcard erster Aktivierungsdaten unter Verwendung der Aktivierungsmitteilung, Bereitstellen (403) der ersten Aktivierungsdaten an die primäre Decodervorrichtung über die primäre Schnittstelle, und Aktivieren (201) der primären Decodervorrichtung unter Verwendung der ersten Aktivierungsdaten;
Empfangen (501) in der sekundären Smartcard einer Initialisierungsmitteilung von dem Head-End-System, Erzeugen (502) in der sekundären Smartcard von Initialisierungsdaten unter Verwendung der Initialisierungsmitteilung, Bereitstellen (503) der Initialisierungsdaten an die sekundäre Decodervorrichtung über die sekundäre Schnittstelle, und Initialisieren (301) der sekundären Decodervorrichtung unter Verwendung der Initialisierungsdaten;
Erzeugen (404) von zweiten Aktivierungsdaten in der primären Smartcard und Bereitstellen (405) der zweiten Aktivierungsdaten an die primäre Decodervorrichtung über die erste Schnittstelle;
Bereitstellen (202) der zweiten Aktivierungsdaten von der primären Decodervorrichtung an die sekundäre Smartcard; und
Bereitstellen (504) der zweiten Aktivierungsdaten von der sekundären Smartcard an die sekundäre Decodervorrichtung über die sekundäre Schnittstelle, und Aktivieren (302) der sekundären Decodervorrichtung unter Verwendung der zweiten Aktivierungsdaten, und wobei die primäre Smartcard einen ersten Zeitgeber umfasst, und wobei das Verfahren ferner die Schritte umfasst eines Einstellens (405) des ersten Zeitgebers unter Verwendung eines ersten, in der Aktivierungsmitteilung enthaltenen Zeitgeberwertes, eines Aktivierens (406) des ersten Zeitgebers, und auf einen Ablauf des ersten Zeitgeberwertes hin, eines Bereitstellens (202) erneuerter zweiter Aktivierungsdaten von der primären Decodervorrichtung an die sekundäre Smartcard.

2. Verfahren nach Anspruch 1, wobei die primäre Schnittstelle ferner für eine Kommunikation mit der sekundären Smartcard eingerichtet ist, und wobei die zweiten Aktivierungsdaten von der primären Decodervorrichtung an die sekundäre Smartcard durch die primäre Schnittstelle bereitgestellt werden (202).

3. Verfahren nach Anspruch 1, wobei die primäre Decodervorrichtung mit der sekundären Decodervorrichtung in Kommunikationsverbindung steht und wobei die zweiten Aktivierungsdaten von der primären Decodervorrichtung an die sekundäre Smartcard durch eine Kommunikationsverbindung zwischen der primären Decodervorrichtung und der sekundären Decodervorrichtung bereitgestellt werden (202).

4. Verfahren nach einem der Ansprüche 1-3, wobei die sekundäre Smartcard einen zweiten Zeitgeber umfasst und wobei das Verfahren ferner die Schritte umfasst eines Einstellens (505) des zweiten Zeitgebers unter Verwendung eines zweiten in der Initialisierungsmitteilung enthaltenen Zeitgeberwertes, eines Aktivierens (506) des zweiten Zeitgebers und auf einen Ablauf des zweiten Zeitgeberwertes hin, eines Deaktivierens (508) der sekundären Decodervorrichtung bis die erneuerten zweiten Aktivierungsdaten in der sekundären Smartcard empfangen werden.

5. Head-End-System (1) zum Aktivieren einer oder mehrerer sekundärer Decodervorrichtungen (3) in einem System, umfassend das Head-End-System (1), eine primäre Decodervorrichtung (2), welche eine für eine Kommunikation mit einer primären Smartcard (4) eingerichtete primäre Schnittstelle (21) umfasst, und die eine oder mehreren sekundären Decodervorrichtungen (3), welche eine für eine Kommunikation mit einer oder mehreren sekundären Smartcards (5) eingerichtete sekundäre Schnittstelle (31) umfassen, wobei das Head-End-System (1) mit der primären Decodervorrichtung (2) und mit der einen oder den mehreren sekundären Decodervorrichtungen (3) in Kommunikationsverbindung steht, wobei das Head-End-System (1) umfasst:
ein Smartcard-Management-Modul (11), welches dazu eingerichtet ist, die eine oder die mehreren sekundären Smartcards (5) der primären Smartcard (4) zuzuordnen;
ein Aktivierungsmodul (12), welches zum Aktivieren der primären Decodervorrichtung (2) durch Bereitstellen einer Aktivierungsmitteilung an die primäre Smartcard (4) eingerichtet ist; und
ein Initialisierungsmodul (13), welches zum Initialisieren der sekundären Decodervorrichtung (3) durch Bereitstellen einer Initialisierungsmitteilung an die sekundäre Smartcard (5) eingerichtet ist, wobei die Aktivierungsmitteilung einen ersten Zeitgeberwert zum Einstellen eines ersten Zeitgebers (41) in der primären Smartcard (2) umfasst und wobei die Initialisierungsmitteilung einen zweiten Zeitgeberwert zum Einstellen eines zweiten Zeitgebers (51) in der sekundären Smartcard (5) umfasst.

6. Sekundäre Smartcard (5) für eine Verwendung in einem System, umfassend ein Head-End-System (1), eine primäre Decodervorrichtung (2), welche eine für eine Kommunikation mit einer primären Smartcard (4) eingerichtete primäre Schnittstelle (21) umfasst, und eine oder mehrere sekundäre Decodervorrichtungen (3), wobei die sekundäre Decodervorrichtung (3) eine für eine Kommunikation mit der sekundären Smartcard (5) eingerichtete sekundäre Schnittstelle (31) umfasst, wobei die sekundäre Smartcard (5) umfasst:
einen Empfänger (52), welcher zum Empfangen einer Initialisierungsmitteilung von dem Head-End-System (1) eingerichtet ist, wobei der Empfänger (52) ferner eingerichtet ist zum Empfangen von Aktivierungsdaten von der primären Smartcard (4) durch Zwischenschaltung der primären Decodervorrichtung (2);
einen Prozessor (53), welcher zum Erzeugen von Initialisierungsdaten unter Verwendung der Initialisierungsmitteilung eingerichtet ist;
einen Transmitter (54), welcher zum Bereitstellen der Initialisierungsdaten über die sekundäre Schnittstelle (31) an die sekundäre Decodervorrichtung (3) zum Initialisieren der sekundären Decodervorrichtung (3) eingerichtet ist, wobei der Transmitter (54) ferner zum Bereitstellen der Aktivierungsdaten über die sekundäre Schnittstelle (31) an die sekundäre Decodervorrichtung (3) zum Aktivieren der sekundären Decodervorrichtung (3) eingerichtet ist,
ferner umfassend einen Zeitgeber (51), und wobei der Prozessor (53) ferner zum Einstellen des Zeitgebers (51) unter Verwendung eines in der Initialisierungsmitteilung enthaltenen Zeitgeberwertes und zum Aktivieren des Zeitgebers (51) eingerichtet ist, und wobei die sekundäre Smartcard (5) zum Deaktivieren der sekundären Decodervorrichtung (3) auf einen Ablauf des zweiten Zeitgeberwertes hin eingerichtet ist, bis erneuerte zweite Aktivierungsdaten von der primären Smartcard (4) empfangen werden.

7. Sekundäre Smartcard (5) nach Anspruch 6, wobei der Empfänger (52) zum Empfangen der Aktivierungsdaten von der primären Smartcard (4) durch Zwischenschaltung der primären Decodervorrichtung (2) durch die primäre Schnittstelle (21) eingerichtet ist.

8. Sekundäre Smartcard (5) nach Anspruch 6, wobei der Empfänger (52) zum Empfangen der Aktivierungsdaten von der primären Smartcard (4) durch Zwischenschaltung der primären Decodervorrichtung (2) durch eine Kommunikationsverbindung zwischen der primären Decodervorrichtung (2) und der sekundären Decodervorrichtung (3) und der sekundären Schnittstelle (31) eingerichtet ist.

## Revendications

1. Procédé permettant d'activer un ou plusieurs dispositifs décodeurs secondaires dans un système comprenant un système de tête de réseau, un dispositif décodeur primaire et le ou les plusieurs dispositifs décodeurs secondaires, le système de tête de réseau étant connecté en communication au dispositif décodeur primaire et à un ou à plusieurs dispositifs décodeurs secondaires, le procédé comprenant les étapes :
d'activation du dispositif décodeur primaire par le système de tête de réseau active (101) ;
l'initialisation par le système de tête de réseau (102) du dispositif décodeur secondaire ; et
l'activation par le dispositif décodeur primaire (200) du dispositif décodeur secondaire initialisé,
où le dispositif décodeur primaire comprend une interface primaire configurée pour communiquer avec une carte à puce primaire et le dispositif décodeur secondaire comprend une interface secondaire configurée pour communiquer avec une carte à puce secondaire, le procédé comprenant en outre les étapes qui consistent :
à recevoir (401) dans la carte à puce primaire un message d'activation à partir du système de tête de réseau, à créer (402) dans la carte à puce primaire des premières données d'activation en utilisant le message d'activation, à fournir (403) les premières données d'activation par l'intermédiaire de l'interface primaire au dispositif décodeur primaire et à activer (201) le dispositif décodeur primaire en utilisant les premières données d'activation ;
à recevoir (501) dans la carte à puce secondaire un message d'initialisation à partir du système de tête de réseau, à créer (502) dans la carte à puce secondaire des données d'initialisation en utilisant le message d'initialisation, à fournir (503) les données d'initialisation par l'intermédiaire de l'interface secondaire au dispositif décodeur secondaire et à initialiser (301) le dispositif décodeur secondaire en utilisant les données d'initialisation ;
à créer (404) dans la carte à puce primaire des deuxièmes données d'activation et à fournir (405) les deuxièmes données d'activation par l'intermédiaire de la première interface du dispositif décodeur primaire ;
à fournir (202) les deuxièmes données d'activation du dispositif décodeur primaire à la carte à puce secondaire ; et
à fournir (504) les deuxièmes données d'activation de la carte à puce secondaire par l'intermédiaire de l'interface secondaire au dispositif décodeur secondaire et à activer (302) le dispositif décodeur secondaire en utilisant les deuxièmes données d'activation,
et où la carte à puce primaire comprend une première minuterie, et où le procédé comprend en outre les étapes de réglage (405) de la première minuterie en utilisant une valeur de la première minuterie comprise dans le message d'activation, d'activation (406) de la première minuterie et, à l'expiration de la valeur de la première minuterie, de fourniture (202) des deuxièmes données d'activation renouvelées à partir du dispositif décodeur primaire à la carte à puce secondaire.

2. Procédé selon la revendication 1, dans lequel l'interface primaire est configurée en outre pour communiquer avec la carte à puce secondaire, et où la fourniture (202) des deuxièmes données d'activation du dispositif décodeur primaire à la carte à puce secondaire à travers l'interface primaire.

3. Procédé selon la revendication 1, dans lequel le dispositif décodeur primaire est connecté en communication au dispositif décodeur secondaire, et la fourniture (202) des deuxièmes données d'activation du dispositif décodeur primaire à la carte à puce secondaire à travers une liaison de communication entre le dispositif décodeur primaire et le dispositif décodeur secondaire.

4. Procédé selon l'une quelconque des revendications 1 à 3, dans lequel la carte à puce secondaire comprend une deuxième minuterie, et où le procédé comprend en outre les étapes de réglage (505) de la deuxième minuterie en utilisant une valeur de la deuxième minuterie comprise dans le message d'initialisation, d'activation (506) de la deuxième minuterie et, à l'expiration de la valeur de la deuxième minuterie, la désactivation (508) du dispositif décodeur secondaire jusqu'à ce que les deuxièmes données d'activation renouvelées soient reçues dans la carte à puce secondaire.

5. Système de tête de réseau (1) destiné à activer un ou plusieurs dispositifs décodeurs secondaires (3) dans un système comprenant le système de tête de réseau (1), un dispositif décodeur primaire (2) comprenant une interface primaire (21) configurée pour communiquer avec une carte à puce primaire (4), et un ou plusieurs dispositifs décodeurs secondaires (3) comprenant une interface secondaire (31) configurée pour communiquer avec un ou plusieurs cartes à puce secondaires (5), le système de tête de réseau (1) étant connecté en communication au dispositif décodeur primaire (2) et à un ou à plusieurs dispositifs décodeurs secondaires (3), le système de tête de réseau (1) comprenant :
un module de gestion (11) de cartes à puce configuré pour associer la ou les plusieurs cartes à puce secondaires (5) à la carte à puce primaire (4) ;
un module d'activation (12) configuré pour activer le dispositif décodeur primaire (2) en fournissant un message d'activation à la carte à puce primaire (4) ; et
un module d'initialisation (13) configuré pour initialiser le dispositif décodeur secondaire (3) en fournissant un message d'initialisation à la carte à puce secondaire (5), où le message d'activation comprend une valeur d'une première minuterie pour régler une première minuterie (41) dans la carte à puce primaire (2), et où le message d'initialisation comprend une valeur d'une deuxième minuterie pour régler une deuxième minuterie (51) dans la carte à puce secondaire (5).

6. Carte à puce secondaire (5) destinée à être utilisée dans un système comprenant un système de tête de réseau (1), un dispositif décodeur primaire (2) comprenant une interface primaire (21) configurée pour communiquer avec une carte à puce primaire (4), et un ou plusieurs dispositifs décodeurs secondaires (3), le dispositif décodeur secondaire (3) comprenant une interface secondaire (31) configurée pour communiquer avec la carte à puce secondaire (5), la carte à puce secondaire (5) comprenant :
un récepteur (52) configuré pour recevoir un message d'initialisation du système de tête de réseau (1), le récepteur (52) configuré en outre pour recevoir des données d'activation de la carte à puce primaire (4) par l'intermédiaire du dispositif décodeur primaire (2) ;
un processeur (53) configuré pour créer des données d'initialisation en utilisant le message d'initialisation ;
un émetteur (54) configuré pour fournir les données d'initialisation par l'intermédiaire de l'interface secondaire (31) au dispositif décodeur secondaire (3) pour initialiser le dispositif décodeur secondaire (3), l'émetteur (54) configuré en outre pour fournir les données d'activation par l'intermédiaire de l'interface secondaire (31) au dispositif décodeur secondaire (3) pour activer le dispositif décodeur secondaire (3),
comprenant en outre une minuterie (51), et où le processeur (53) est configuré en outre pour régler la minuterie (51) en utilisant une valeur de minuterie comprise dans le message d'initialisation et pour activer la minuterie (51), et où la carte à puce secondaire (5) est configurée pour désactiver le dispositif décodeur secondaire (3) à l'expiration de la valeur de la deuxième minuterie jusqu'à ce que des deuxièmes données d'activation renouvelées soient reçues depuis la carte à puce primaire (4).

7. Carte à puce secondaire (5) selon la revendication 6, dans laquelle le récepteur (52) est configuré pour recevoir les données d'activation de la carte à puce primaire (4) par l'intermédiaire du dispositif décodeur primaire (2) à travers l'interface primaire (21).

8. Carte à puce secondaire (5) selon la revendication 6, dans laquelle le récepteur (52) est configuré pour recevoir les données d'activation de la carte à puce primaire (4) par l'intermédiaire du dispositif décodeur primaire (2) à travers une liaison de communication entre le dispositif décodeur primaire (2) et le dispositif décodeur secondaire (3) et l'interface secondaire (31).
